# EUROPEAN PATENT SPECIFICATION

(11) **EP 3 644 063 B1**
(45) Date of publication and mention of the grant of the patent: **26.07.2023**
(21) Application number: 18202153.5
(22) Date of filing: 23.10.2018
(51) Int. Cl.: G01N 35/00, G01N 35/04

(54) **METHOD OF HANDLING LABORATORY SAMPLE CONTAINERS**
VERFAHREN ZUR HANDHABUNG VON LABORPROBENBEHÄLTERN
PROCÉDÉ DE MANIPULATION DE CONTENANTS D'ÉCHANTILLONS DE LABORATOIRE

(43) Date of publication of application: 29.04.2020
(73) Proprietor: Roche Diagnostics GmbH, 68305 Mannheim (DE); F. Hoffmann-La Roche AG, 4070 Basel (CH)
(72) Inventor: Baltasar Badaya, Raul, Maybachstrasse 30, 71332 Waiblingen (DE); Baumgart, Julian, Maybachstrasse 30, 71332 Waiblingen (DE)
(74) Representative: Patentanwälte Ruff, Wilhelm, Beier, Dauster & Partner mbB

(56) References cited:
- WO-A1-2015/069547
- JP-A- S62 287 161

## Description

The invention relates to a method of handling laboratory sample containers and to an apparatus for handling laboratory sample containers.

JP S62 287161 A discloses to use deviation detection sensors arranged at positions on peripheral surface of insertion holes of a container support plate to center a robot hand inserting a container into the insertion hole.

It is an object of the invention to provide for a method of handling laboratory sample containers ensuring safe handling of the laboratory sample containers.

The invention solves this object by a method of handling laboratory sample containers according to claim 1.

The method of handling laboratory sample containers comprises the following steps.

Step a), namely moving a laboratory sample container, e.g. in form of a laboratory sample container tube (shortly called tube), to a target position. The target position is a position of the laboratory sample container at which the laboratory sample container is inserted into a corresponding orifice or reception of a laboratory sample container rack, provided that the laboratory sample container rack is placed at an intended (or scheduled/expected) position. Laboratory sample container racks are typically adapted to store a number (e.g. 2 to 128) of laboratory sample containers in corresponding orifices or receptions. The number of laboratory sample containers to be stored in the laboratory sample container rack depends on the type of the laboratory sample container rack. Reference insofar is also made to the relevant technical literature. The laboratory sample container is prevented from moving horizontally more than a predetermined horizontal distance, e.g. 0,1 mm to 10 mm, if correctly inserted into the corresponding orifice of the laboratory sample container rack. The predetermined horizontal distance depends on the mechanical and geometrical properties of the used laboratory sample container racks and is typically a priori known.

The method further comprises the following steps, namely b), applying a force in an horizontal direction to the laboratory sample container, c) determining if the laboratory sample container moves more than the predetermined horizontal distance, and d) performing an error procedure if it is determined that the laboratory sample container moves more than the predetermined horizontal distance.

The force is typically chosen such that the laboratory sample container is not damaged. If it is determined that the laboratory sample container does not move more than the predetermined horizontal distance, it may be deduced that the laboratory sample container rack is placed at the intended position.

According to an embodiment, the laboratory sample container is held by a gripping device having two gripping fingers, wherein the gripping fingers are moved towards each other along a gripping direction during a gripping operation, wherein during step b) the force is applied in the gripping direction. This avoids the tilting and displacement of the laboratory sample container.

According to an embodiment, after step a) and before steps b) to d) the following steps are performed: e) applying a force in a vertical direction to the laboratory sample container, f) determining if the laboratory sample container moves in the vertical direction more than a predetermined vertical distance, e.g. 0,1 mm to 10 mm, and g) performing steps b) to d) if it is determined that the laboratory sample container moves in the vertical direction more than the predetermined vertical distance. If it is determined that the laboratory sample container does not move more than the predetermined vertical distance, it may be directly determined that the laboratory sample container rack is placed at its intended position. Steps e) to g) may be denoted as rack detection in z dimension.

By means of the steps e) and f) a first check is performed if the laboratory sample container rack is placed at the intended position. If the laboratory sample container rack is placed at the intended position, the vertical movement of the laboratory sample container should be limited to the predetermined vertical distance, since as soon as the laboratory sample container is fully inserted into the orifice, the laboratory sample container rack forms a stopper such that a further vertical movement is prevented. If a significant movement in the z direction is determined, it can be deduced that the laboratory sample container rack is not placed at its intended position. Nevertheless, under certain circumstances, although the laboratory sample container rack is placed at its intended position, a vertical movement of the laboratory sample container may occur, e.g. because the laboratory sample container is not fully inserted into the orifice of the laboratory sample container rack and/or a slip between a gripper gripping the laboratory sample container and the laboratory sample container occurs. To prevent a false result that no laboratory sample container rack is placed at the intended position despite that the laboratory sample container rack is placed correctly, steps b) to d) are performed to implement a second check which may be denoted as rack detection in xy dimension. If it is determined that the laboratory sample container also moves in the horizontal direction, an error processing is performed.

According to an embodiment, the step of moving the laboratory sample container to the target position and the steps of applying forces to the laboratory sample container is performed by means of one or more electric motors, wherein the electric motor(s) can be operated in a torque mode and in a velocity mode (also called speed mode or standalone mode). In the torque mode the electric motor provides an adjustable torque. In the velocity mode the electric motor provides an adjustable velocity or speed. The step of moving the laboratory sample container to the target position may be performed using the velocity mode, and the step of applying forces to the laboratory sample container may be performed using the torque mode.

According to an embodiment, the step of performing an error procedure comprises the step of: generating an error message indicating that the laboratory sample container rack is not placed at the intended position. The errors message may be e.g. be embodied as an acoustical sign, and/or as a visual sign, and/or as corresponding data being transmitted to a receiver.

According to the invention, when laboratory sample containers are to be placed into corresponding orifices of laboratory sample container racks, e.g. during a so called out sort operation, it is monitored if the laboratory sample container rack is placed at its intended position. If it is determined that the laboratory sample container rack is not placed at its intended position, an error procedure is performed, e.g. preventing that a gripper handling the laboratory sample container is opened such that the laboratory sample container falls onto a surface causing pollution.

The invention is based on the finding, that if the laboratory sample container is inserted in the orifice of the rack, it is possible to detect the presence of the rack by applying a horizontal force to the laboratory sample container. If the laboratory sample container rack is placed at its intended position, the laboratory sample container rack prevents a movement of the laboratory sample container in the xy dimension. Thus, if the laboratory sample container does not move, it can be deduced that the laboratory sample container rack is placed at its intended position. If the laboratory sample container moves, it can be deduced that the laboratory sample container rack is not placed at its intended position. To detect the movement, e.g. a motor encoder feedback may be used.

In output sorter units when laboratory sample containers in form of tubes have to be placed into racks, the presence of racks have to be validated before opening a gripper handling the tubes. This may e.g. be done by pushing the tubes towards an expected rack bottom and, e.g. using a motor encoder feedback, detecting the expected collision. This may be called detection in z dimension. Nevertheless, when the detection in z dimension returns false results (false negative), indicating that there is no rack despite the fact that a rack is present, unnecessary user interactions are caused.

Assuming that the tube is already inserted in the rack, but not yet in contact with the rack bottom, according to the invention it is possible to detect the presence of the rack by doing a diagonal movement in xy dimension and e.g. using the motor encoder feedback in the same way as in the detection in z dimension to detect a collision between the tube and the expected rack.

This movement may have the following properties. The diagonal movement shall be done in a perpendicular direction to the gripper plane, to avoid the tilting and displacement of the tube. x-and y-motors shall move simultaneously and the same distance, x- and y-motor parameters shall ensure smooth movement and immediate stop when the rack is detected. Once the rack is detected, the tube is returned to its original position in xy dimension and a gripper is opened, in order to leave the tube at its original position.

To ensure the correct placement of a tube at the rack bottom, the rack detection in z dimension may be combined with the inventive rack detection in xy dimension.

First, rack detection in z dimension is performed. If the rack is detected, the method may be terminated with positive rack detection.

If the rack is not detected, rack detection in xy dimension may be performed. At this point, it can be assumed that the first detection in z dimension leaves the tube already inserted in the rack (pre-condition for xy dimension detection).

If the rack is not detected, the method may terminate with a result indicating that no rack is present.

If the rack is detected in xy dimension, the rack detection in z dimension may be performed again, increasing the insertion depth, as the presence of a rack can be safely assumed. If the rack is then detected in z dimension, a positive rack detection result can be returned.

If the rack is not detected in z dimension, an unknown rack detection error can be returned.

The invention adds extra robustness and highly reduces the amount of "false negatives" in rack detection, thus reducing the user interaction and extending the walk away time of the device.

The invention can e.g. be used in the following scenario. A laboratory sample container or tube has to be inserted into a rack. It is assumed that the tube is initially inserted into the rack somewhat elevated at the target position, such that the standard rack detection in z dimension will return a false negative although the rack is present. Now, the rack detection in xy dimension is performed reporting that a rack is present. Then, the tube is picked at a higher position and the rack detection in z dimension is performed again. If the rack detection in z dimension fails again, a "no rack detected" error is output. If the rack is detected in z dimension, "rack detected" is output.

The invention will now be described in detail with respect to the drawings, wherein
- Fig. 1: depicts a laboratory sample container rack in a top view,
- Fig. 2: highly schematically depicts a cross section of a part of the laboratory sample container rack depicted in fig. 1 in a side view containing a laboratory sample container inserted into an orifice of the laboratory sample container rack, and
- Fig. 3: highly schematically depicts a gripping device in a bottom view.

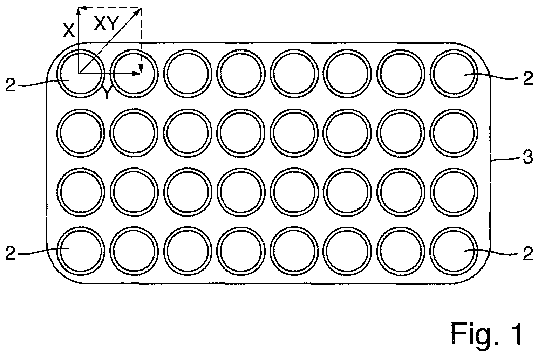

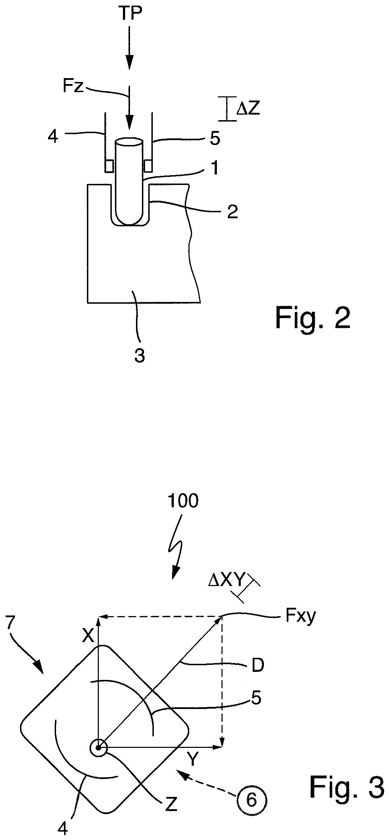

Fig. 1 depicts a conventional laboratory sample container rack 3 in a bottom view. The laboratory sample container rack 3 comprises a number of 32 orifices 2, being adapted to receive conventional laboratory sample containers 1, also denoted as tubes, see fig. 2.

Fig. 2 highly schematically depicts a cross section of a part of the laboratory sample container rack 3 depicted in fig. 1 in a side view, wherein a laboratory sample container 1 inserted into one of the orifices 2. The laboratory sample container 1 is held two gripping fingers 4, 5 of a conventional gripping device 7, see also fig. 3.

Fig. 3 highly schematically depicts the gripping device 7 comprising the fingers 4, 5 in a top view. Reference is made insofar also to the relevant technical literature.

The gripping device 7 is part of an apparatus 100, wherein the apparatus 100 comprises a number of electric motors 6 being adapted to move the laboratory sample container 1 by driving the gripping device 7. For the sake of explanation, only a single electric motor 6 is depicted. Self-evidently, the apparatus may contain a sufficient number of electric motors 6 to enable the necessary degrees of motional freedom. E.g. three electric motors 6 may be provided, one for driving an x axis, one for driving a y axis and one for driving a z axis. Gripping fingers may be actuated by a further motor.

The operation of the apparatus will be described in detail below.

If a laboratory sample container 1 is to be inserted into a corresponding orifice 2 of the laboratory sample container rack 3, the laboratory sample container 1 is moved to a target position TP by means of the gripping device 7. The target position TP is a position at which the laboratory sample container 1 is inserted into a corresponding orifice 2 of a laboratory sample container rack 3, as depicted in fig. 2, provided that the laboratory sample container rack 3 is placed at an intended position.

The laboratory sample container 1 is prevented from moving horizontally more than a predetermined horizontal distance Δxy, see fig. 3, if inserted into the corresponding orifice 2 of the laboratory sample container rack 3. Δxy may e.g. range between 0.1 mm and 1 mm, depending on the type of rack 3 used.

After moving the laboratory sample container 1 to the target position TP, a vertical force Fz is applied in a vertical direction z to the laboratory sample container 1.

Then, it is determined if the laboratory sample container 1 moves in the vertical direction z more than a predetermined vertical distance Δz, e.g. 0,1 mm. If the laboratory sample container rack 3 is placed at its intended position and if the laboratory sample container 1 is fully inserted into the orifice 2, the laboratory sample container 1 is prevented from moving in the vertical direction z more than predetermined vertical distance Δz.

If no relevant movement in the vertical direction z is measured, it is deduced that the laboratory sample container rack 3 is placed at its intended position and the gripping device 7 opens the gripping fingers 4 and 5, elevates the gripping fingers 4 and 5 in z direction and may perform a further gripping operation.

On the other hand, if it is determined that the laboratory sample container 1 moves in the vertical direction z more than the predetermined vertical distance Δz, a further check is performed to evaluate if the laboratory sample container rack 3 is placed at its intended position to prevent false negative results.

Therefore, a force Fxy in a horizontal direction xy is applied to the laboratory sample container 1. Then, it is determined if the laboratory sample container 1 moves in the horizontal direction xy more than the predetermined horizontal distance Δxy, e.g. 0,2 mm.

If it is determined that the laboratory sample container 1 moves in the horizontal direction xy more than the predetermined horizontal distance Δxy an error procedure is performed, e.g. by generating an error message.

If on the other hand it is determined that the laboratory sample container 1 does not move in the horizontal direction xy more than the predetermined horizontal distance Δxy, it can be deduced that the laboratory sample container rack 3 is placed at its intended position. Consequently, the gripper may release the laboratory sample container 1 and may perform a further gripping operation. Alternatively, a further check in the z direction may be performed.

Referring to fig. 3, the gripping fingers 4, 5 are moved towards each other along a gripping direction D during a gripping operation, wherein the force Fxy is applied in the gripping direction D.

## Claims

1. Method of handling laboratory sample containers (1), the method comprising the steps of:
a) moving a laboratory sample container (1) to a target position (TP), wherein the target position (TP) is a position at which the laboratory sample container (1) is inserted into a corresponding orifice (2) of a laboratory sample container rack (3), provided that the laboratory sample container rack (3) is placed at an intended position, wherein the laboratory sample container (1) is prevented from moving horizontally more than a predetermined horizontal distance (Δxy) if inserted into the corresponding orifice (2) of the laboratory sample container rack (3),
**characterized by** the steps:
b) applying a force (Fxy) in an horizontal direction (xy) to the laboratory sample container (1),
c) determining if the laboratory sample container (1) moves in the horizontal direction (xy) more than the predetermined horizontal distance (Δxy), and
d) performing an error procedure if it is determined that the laboratory sample container (1) moves in the horizontal direction (xy) more than the predetermined horizontal distance (Δxy).

2. Method according to claim 1, **characterized in that**
- the laboratory sample container (1) is held by a gripping device (7) having two gripping fingers (4, 5), wherein the gripping fingers (4, 5) are moved towards each other along a gripping direction (D) during a gripping operation, wherein during step b) the force (Fxy) in the horizontal direction (xy) is applied in the gripping direction (D).

3. Method according to claim 1 or 2, **characterized in that**
- after step a) and before steps b) to d) the following steps are performed:
e) applying a force (Fz) in a vertical direction (z) to the laboratory sample container (1),
f) determining if the laboratory sample container (1) moves in the vertical direction (z) more than a predetermined vertical distance (Δz), and
g) performing steps b) to d) if it is determined that the laboratory sample container (1) moves in the vertical direction (z) more than the predetermined vertical distance (Δz).

4. Method according to one of the preceding claims, **characterized in that**
- the step of performing an error procedure comprises the step of:
- generating an error message indicating that the laboratory sample container rack (3) is not placed at the intended position.

## Patentansprüche

1. Verfahren zum Handhaben von Laborprobenbehältern (1), wobei das Verfahren die folgenden Schritte umfasst:
a) Bewegen eines Laborprobenbehälters (1) in eine Zielposition (TP), wobei die Zielposition (TP) eine Position ist, in der der Laborprobenbehälter (1) in eine entsprechende Öffnung (2) eines Laborprobenbehältergestells (3) eingeführt wird, vorausgesetzt, dass das Laborprobenbehältergestellt (3) in einer vorgesehenen Position platziert ist, wobei verhindert wird, dass sich der Laborprobenbehälter (1) horizontal mehr als eine vorbestimmte horizontale Strecke (Δxy) bewegt, wenn er in die entsprechende Öffnung (2) des Laborprobenbehältergestells (3) eingeführt wird,
**gekennzeichnet durch** die folgenden Schritte:
b) Ausüben einer Kraft (Fxy) in einer horizontalen Richtung (xy) auf den Laborprobenbehälter (1),
c) Bestimmen, ob sich der Laborprobenbehälter (1) mehr als die vorbestimmte horizontale Strecke (Δxy) in der horizontalen Richtung (xy) bewegt, und
d) Ausführen einer Fehlerprozedur, wenn bestimmt wird, dass sich der Laborprobenbehälter (1) mehr als die vorbestimmte horizontale Strecke (Δxy) in der horizontalen Richtung (xy) bewegt.

2. Verfahren nach Anspruch 1, **dadurch gekennzeichnet, dass**
- der Laborprobenbehälter (1) von einer Greifvorrichtung (7) mit zwei Greiffingern (4, 5) gehalten wird, wobei die Greiffinger (4, 5) während eines Greifvorgangs entlang einer Greifrichtung (D) aufeinander zu bewegt werden, wobei während Schritt b) die Kraft (Fxy) in der horizontalen Richtung (xy) in der Greifrichtung (D) ausgeübt wird.

3. Verfahren nach Anspruch 1 oder 2, **dadurch gekennzeichnet, dass**
- nach Schritt a) und vor den Schritten b) bis d) die folgenden Schritte ausgeführt werden:
e) Ausüben einer Kraft (Fz) in einer vertikalen Richtung (z) auf den Laborprobenbehälter (1),
f) Bestimmen, ob sich der Laborprobenbehälter (1) mehr als eine vorbestimmte vertikale Strecke (Δz) in der vertikalen Richtung (z) bewegt, und
g) Ausführen der Schritte b) bis d), wenn bestimmt wird, dass sich der Laborprobenbehälter (1) mehr als eine vorbestimmte vertikale Strecke (Δz) in der vertikalen Richtung (z) bewegt.

4. Verfahren nach einem der vorstehenden Ansprüche, **dadurch gekennzeichnet, dass**
- der Schritt des Ausführens einer Fehlerprozedur den folgenden Schritt umfasst:
- Erzeugen einer Fehlermeldung, die anzeigt, dass das Laborprobenbehältergestell (3) nicht in der vorgesehenen Position platziert ist.

## Revendications

1. Procédé de manipulation de contenants d'échantillons de laboratoire (1), le procédé comprenant les étapes de :
a) déplacement d'un contenant d'échantillon de laboratoire (1) jusqu'à une position cible (TP), dans lequel la position cible (TP) est une position à laquelle le contenant d'échantillon de laboratoire (1) est inséré dans un orifice (2) correspondant d'un portoir (3) de contenants d'échantillons de laboratoire, à la condition que le portoir (3) de contenants d'échantillons de laboratoire soit placé au niveau d'une position prévue, dans lequel le contenant d'échantillon de laboratoire (1) est empêché de se déplacer horizontalement de plus d'une distance horizontale (Δxy) prédéterminée s'il est inséré dans l'orifice (2) correspondant du portoir (3) de contenants d'échantillons de laboratoire,
**caractérisé par** les étapes :
b) application d'une force (Fxy) dans une direction horizontale (xy) au contenant d'échantillon de laboratoire (1),
c) détermination si le contenant d'échantillon de laboratoire (1) se déplace dans la direction horizontale (xy) de plus de la distance horizontale (Δxy) prédéterminée, et
d) réalisation d'une procédure d'erreur s'il est déterminé que le contenant d'échantillon de laboratoire (1) se déplace dans la direction horizontale (xy) de plus de la distance horizontale (Δxy) prédéterminée.

2. Procédé selon la revendication 1, **caractérisé en ce que**
- le contenant d'échantillon de laboratoire (1) est maintenu par un dispositif de préhension (7) ayant deux doigts de préhension (4, 5), dans lequel les doigts de préhension (4, 5) sont déplacés l'un vers l'autre le long d'une direction de préhension (D) pendant une opération de préhension, dans lequel pendant l'étape b), la force (Fxy) dans la direction horizontale (xy) est appliquée dans la direction de préhension (D).

3. Procédé selon la revendication 1 ou 2, **caractérisé en ce que**
- après l'étape a) et avant les étapes b) à d), les étapes suivantes sont réalisées :
e) application d'une force (Fz) dans une direction verticale (z) au contenant d'échantillon de laboratoire (1),
f) détermination si le contenant d'échantillon de laboratoire (1) se déplace dans la direction verticale (z) de plus d'une distance verticale (Δz) prédéterminée, et
g) réalisation des étapes b) à d) s'il est déterminé que le contenant d'échantillon de laboratoire (1) se déplace dans la direction verticale (z) de plus de la distance verticale (Δz) prédéterminée.

4. Procédé selon l'une des revendications précédentes, **caractérisé en ce que**
- l'étape de réalisation d'une procédure d'erreur comprend l'étape de :
- génération d'un message d'erreur indiquant que le portoir (3) de contenants d'échantillons de laboratoire n'est pas placé au niveau de la position prévue.
